# EUROPÄISCHE PATENTSCHRIFT

(11) **EP 0 554 884 B1**
(45) Veröffentlichungstag und Bekanntmachung des Hinweises auf die Patenterteilung: **18.09.1996**
(21) Anmeldenummer: 93101801.4
(22) Anmeldetag: 05.02.1993
(51) Int. Cl.: A01K 39/02

(54) **Kleintiertränkeventil**
Drinking valve for small animals
Soupape d'abreuvoir pour petits animaux

(30) Priorität: 07.02.1992 DE 4203450
(43) Veröffentlichungstag der Anmeldung: 11.08.1993
(73) Patentinhaber: HANS NEHER GmbH & CO., KG., D-35789 Weilmünster (DE)
(72) Erfinder: Erbe, Siegfried, W-6292 Weilmünster 4 (DE)
(74) Vertreter: Schumacher, Bernd, Dipl.-Ing.

(56) Entgegenhaltungen:
- US-A- 2 614 531
- US-A- 4 524 724
- US-A- 5 154 138

## Beschreibung

Die Erfindung betrifft ein Kleintiertränkeventil, insbesondere für Hühner, mit einem einen steuerbaren Wasserdurchlaufkanal aufweisenden Ventilgehäuse, wobei ein erstes Ende des Ventilgehäuses mit einer Wasserrohrleitung strömungsmäßig verbindbar ist, wobei ferner von einem zweiten Ende des Ventilgehäuses ein von einem Tier betätigbarer, insbesondere kippbarer und/oder längsverschiebbarer, in Betriebsposition etwa vertikaler Ventilbetätigungsstift vorsteht, wobei ferner in einem erweiterten Gehäuseinnenraum ein unter Schwerkrafteinfluß bewegliches Ventildichtelement angeordnet ist, dem wasserablaufseitig ein stationärer ringförmiger Ventildichtsitz zugeordnet ist und das beim Handhaben des Ventilbetätigungsstifts von seinem Ventildichtsitz öffnend abhebbar ist, und wobei am freien Ende des Ventilbetätigungsstiftes ein Tropfenfänger angeordnet ist,

Bei einem solchen Kleintiertränkeventil (DE-GM 91 01 513) hebt und/oder kippt das Tier zum Trinken den Ventilbetätigungsstift, wodurch das Ventil geöffnet wird und Wasser aus der Unterseite des Ventils austritt. Erschwerend ist hierbei, daß sich das Wasser an der Oberseite des Tropfenfängers ansammelt, so daß die Wasserzugänglichkeit für das Tier erschwert ist. Problematisch ist hierbei ferner, daß das Wasser vielfach mehr oder weniger unkontrolliert austritt, z.B. nachtropft, und schließlich in das Nest abtropft, weil der gegenüber dem Ventilbetätigungsstift querschnittserweiterte Tropfenfänger aufgrund seiner speziellen Ausbildung eine ungenügende Tropfenfangwirkung hat. Dieses führt zu Übernässungen und hiermit verbundenen Verunreinigungen des Nestes. .

Der vorliegenden Erfindung liegt die Aufgabe zugrunde, ein Kleintiertränkeventil der genannten Art mit einfachen Maßnahmen so auszugestalten, daß bei Vermeidung der genannten Nachteile eine gute Wasserzugänglichkeit für ein trinkendes Tier gewährleistet ist und eine ausreichende Tropfenfangwirkung vorliegt.

Zur Lösung der gestellten Aufgabe zeichnet sich ein Kleintiertränkeventil der im Oberbegriff von Anspruch 1 genannten Art erfindungsgemäß durch das im Kennzeichen dieses Anspruchs aufgeführte Merkmal aus. Ein derartiger Tropfenfänger sorgt mit seiner unterseitigen Vertiefung dafür, daß das über die Oberfläche des Ventilbetätigungsstifts nachlaufende Wasser sich am Tropfenfänger sicher sammeln kann und nicht abtropft. Dieses Wasser steht in Form eines größeren unterseitigen Tropfens zur Verfügung und kann wegen der guten Zugänglichkeit von einem trinkenden Tier sehr leicht aufgenommen werden.

Grundsätzlich können eine oder mehrere unterseitige Vertiefungen vorgesehen sein, Gemäß den Weiterbildungen der Ansprüche 2 bis 7 kann die Form der Vertiefung des Tropfenfängers vielfältig sein und den jeweiligen Bedürfnissen angepaßt werden.

Bei der Weiterbildung von Anspruch 8 sorgt die Abrundung dafür, daß das Wasser wirksamer in den Bereich der wasserspeichernden unterseitigen Vertiefung gelangt und nicht an kantigen Oberflächen nach unten abtropft.

Gemäß der Ausgestaltung von Anspruch 9 kann die Querschnittsabmessung des Tropfenfängers derjenigen des Ventilbetätigungsstifts entsprechen. Unter anderem erleichtert das die Montagevorgänge. Der Querschnitt kann beliebig geformt und beispielsweise kreisrund sein.

Alternativ kann gemäß den Ansprüchen 10 bis 12 die Querschnittsabmessung des Tropfenfängers auch größer als diejenige des Ventilbetätigungsstifts sein. Dann läßt sich an der Oberseite des Tropfenfängers eine zusätzliche Wasseraufnahmewanne vorsehen, wodurch die Betriebssicherheit und die Wasseraufnahmefähigkeit noch weiter vergrößert werden. Hierdurch wird eine Nestbenetzung noch sicherer vermieden, weil das aus der Wanne überlaufende Wasser in die unterseitige Vertiefung gelangt. Außerdem ergibt sich eine zweite mögliche Trinkposition.

Gemaß den Weiterbildungen der Ansprüche 13 bis 16 kann der Tropfenfänger einstückig mit dem Ventilbetätigungsstift oder als separates Glied ausgebildet sein. Die erste Möglichkeit ergibt vor allem eine einfache Herstellbarkeit. Die zweite Möglichkeit ist vor allem aus Montagegründen dann wichtig, wenn der Tropfenfänger einen größeren Querschnitt haben und deshalb abtrennbar sein sollte.

Bei der Ausgestaltung gemaß Anspruch 17 kann eine Querschnittserweiterung des Ventilbetätigungsstiftes, also die hierdurch bedingte Oberflächenzunahme in Richtung zum Tropfenfänger, förderlich sein, um ein Abtropfen noch sicherer zu vermeiden. Hierdruch wird der Oberflächenstrom zunehmend langsamer.

Bei der Weiterbildung von Anspruch 18 bildet ein oberer oder innerer Kopf des Ventilbetätigungsstiftes gleichzeitig auch das Ventildichtelement.

Demgegenüber sorgt bei den Weiterbildungen der Ansprüche 19 und 20 der Kopf des Ventilbetätigungsstiftes einerseits für ein Abheben des kugelförmigen Ventildichtelements von einer stationären Dichtfläche und andererseits für eine zusätzliche Abdichtung.

Die Ausgestaltungen der Ansprüche 21 und 22 sehen eine Durchflußbegrenzung vor, so daß das Wasser bei Ventilöffnung begrenzt schnell ausläuft, und zwar unabhängig davon, ob der Ventilbetätigungsstift nur leicht angehoben oder leicht gekippt oder leicht angehoben und gekippt wird.

Die besondere Ausgestaltung von Anspruche 23 ermöglicht es, daß bei einem stärkeren Anheben des Ventilbetätigungsstiftes, insbesondere durch ein größeres Tier, der konische Teil in die Durchflußbegrenzungsöffnung gelangt, so daß eine größere Ventilöffnung entsteht und das Wasser schneller auslaufen kann. Insbesondere wegen der Verjüngung des Ventilbetätigungsstiftes ist es dann besonders wichtig, daß ein geeigneter Tropfenfänger zum Aufnehmen von abfließendem Wasser vorhanden ist.

Die Ausgestaltung von Anspruch 24 stellt sicher, daß Schmutzpartikel von dem Ventil weitgehend ferngehalten werden und eine zusätzliche Dosierungsmaßnahme vorliegt.

Die Erfindung wird nachfolgend an zeichnerisch dargestellten Ausführungsbeispielen näher erläutert. Es zeigen:
- Fig. 1: in einem Schnitt ein Kleintiertränkeventil mit einem separaten kugelförmigen Ventildichtelement und einer endseitigen, randumbördelnden Materialanstauchung als Tropfenfänger,
- Fig. 2: in einem Schnitt ein Kleintiertränkeventil mit einem integrierten konischen Ventildichtelement und einer endseitigen, randumbördelnden Materialanstauchung als Tropfenfänger und
- Fig. 3 bis 7: in Teilansichten verschiedene Ausführungsformen eines Tropfenfängers.

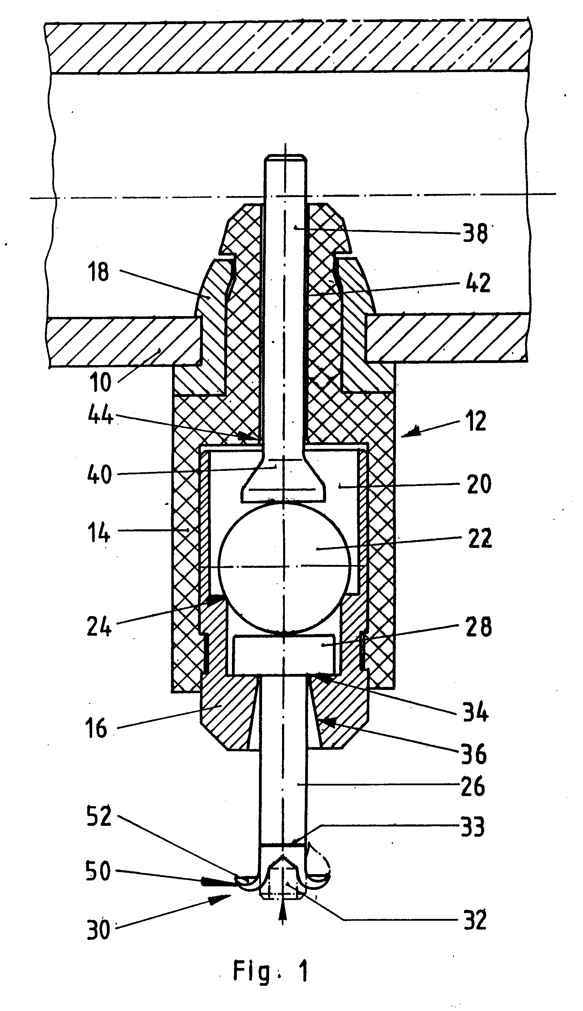

Gemäß Fig. 1 ist an einer Wasserrohrleitung 10 ein in dieses einlaßseitig eingreifendes Kleintiertränkeventil 12 befestigt. Dieses besitzt ein Ventilgehäuse 14 mit einem unteren oder auslaßseitigen, einsetzbaren Innenteil 16 und einem oberen oder einlaßseitigen, elastischen Befestigungsglied 18. Im Gehäuseinnenraum 20 befindet sich mit Spiel ein kugelförmiges Ventildichtelement 22, dem ein stationärer, ringförmig konischer Ventildichtsitz 24 am Innenteil 16 zugeordnet ist. Unter Schwerkrafteinfluß legt sich das Ventildichtelement 22 abdichtend auf den Ventildichtsitz 24.

Ein im wesentlichen zylindischer Ventilbetätigungsstift 26 hat an seinem oberen oder inneren Ende einen zylindrischen Kopf 28, der beim Anheben und/oder Kippen des Ventilbetätigungsstifts 26 das Ventildichtelement 22 vorübergehend von dem Ventildichtsitz 24 abhebt.

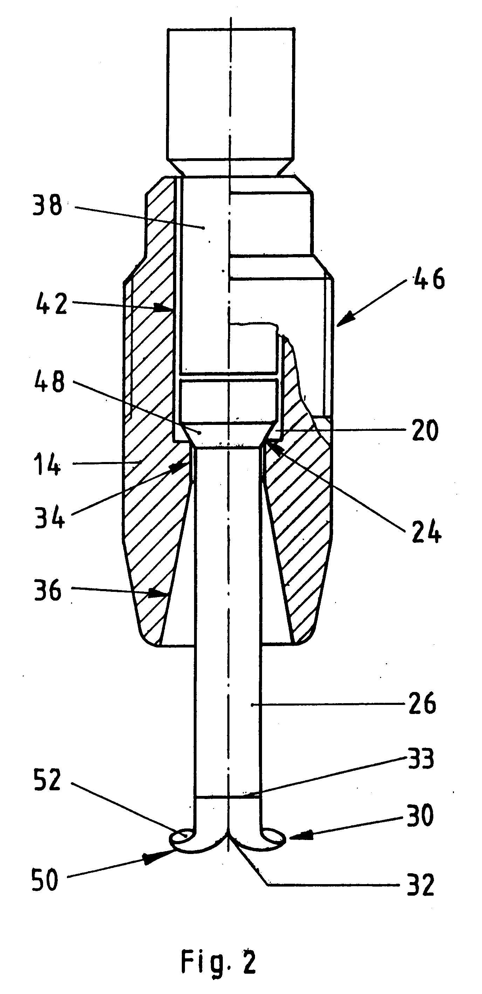

Am freien oder unteren Ende des Ventilbetätigungsstifts 26, an dem zuvor ein stirnseitiges Loch (zeichnerisch angedeutet) ausgebildet war, wurde eine randumbördelnde Materialanstauchung durchgeführt. Hierdurch ergibt sich (gemäß den Fig. 1 und 2) eine als Tropfenfänger 30 dienende radiale Erweiterung 50 mit einer unterseitigen Vertiefung 32 und einer oberseitigen, ringförmigen Wasserauffangwanne 52. Das am Ventilbetätigungsstift abfließende und aus der Wasserauffangwanne überströmende Wasser kann sich dann in der Vertiefung 32 ansammeln, ohne sofort in ein darunter befindliches Nest abzutropfen. Ein trinkendes Tier kann das Wasser in Form eines größeren Tropfens an der Vertiefung 32 entnehmen (bei dieser Ausbildung zusätzlich auch aus der Wanne 52).

Der Tropfenfänger 30 kann direkt am Ventilbetätigungsstift 26 ausgebildet oder auch als separates Teil mit diesem über eine Verbindungsstelle 33 gekoppelt sein.

Im Innenteil 16 befindet sich eine kurze zylindrische Durchflußbegrenzungsöffnung 34, durch die der Ventilbetätigungsstift 26 mit kleinem Spiel geführt ist. Dadurch kann das Wasser bei geöffnetem Ventil aus dem Gehäuseinnenraum 20 nur allmählich ausströmen. An die Durchflußbegrenzungsöffnung 34 schließt sich auslaßseitig eine konische Erweiterung 36 an, die ein Kippen bzw. Schwenken des Ventilbetätigungsstifts 26 ermöglicht.

Ein längsverschiebbarer Vorschaltstift 38 ist mit kleinem Spiel durch einen einlaßseitigen Vorschaltkanal 42 geführt und besitzt an seinem unteren oder inneren Ende ein konisches Glied 40, dessen konischer Bereich einer stationären ringförmigen Dichtfläche 44 zugeordnet ist. Abgesehen von seiner zusätzlichen Dosierwirkung verhindert der Vorschaltstift ein Eintreten von Schmutzpartikeln aus der Wasserrohrleitung 10 in den Gehäuseinnenraum 20.

Wenn sich der Ventilbetätigungsstift 26 in nicht dargestellter Weise von oben nach unten konisch verjüngt, läßt sich beim Anheben desselben der Wasserdurchsatz deutlich steigern, beispielsweise von normalerweise etwa 20 ml/min auf etwa 40 bis 50 ml/min.

Stattdessen kann sich der Ventilbetätigungsstift 26 auch von oben nach unten konisch erweitern. Dadurch ergeben sich eine zunehmend größere Oberfläche und eine verminderte Abfließgeschwindigkeit.

Das Kleintiertränkeventil 46 aus Fig. 2 unterscheidet sich von demjenigen aus Fig. 1 im wesentlichen nur durch einen oberen oder inneren, bereichsweise konischen Kopf 48 des Ventilbetätigungsstifts 26. Dieser Kopf 48 bildet gleichzeitig ein integriertes Ventildichtelement. Sein konischer Bereich ist wie bei Fig. 1 einem ringförmig konischen Ventildichtsitz 24 zugeordnet. Außerdem ist bei Fig. 2 der Vorschaltstift 38 etwas anders ausgebildet. Im übrigen entsprechen die in Fig. 2nicht beschriebenen, jedoch gleich bezeichneten übrigen Teile denjenigen aus Fig. 1, selbst wenn sie teils etwas anders gestaltet sind als bei Fig. 1. Auch hierbei hat der Tropfenfänger 30 eine unterseitige wasseraufnehmende Vertiefung 32.

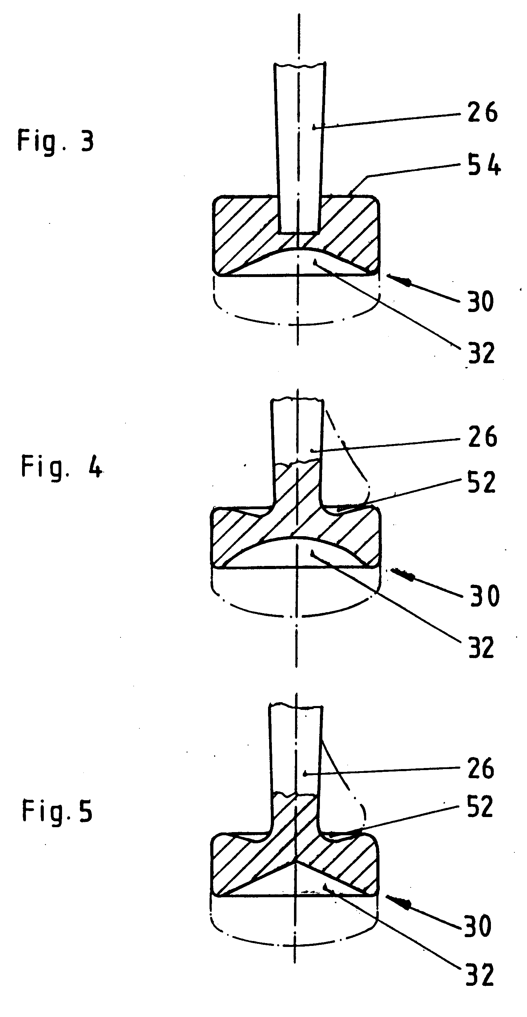

In den Fig. 3 bis 7 sind nur einige mögliche Ausführungsformen des in den Ventilbetätigungsstift 26 integrierten oder hieran anflanschbaren, separaten Tropfenfängers 30 mit der unterseitigen Vertiefung 32 dargestellt.

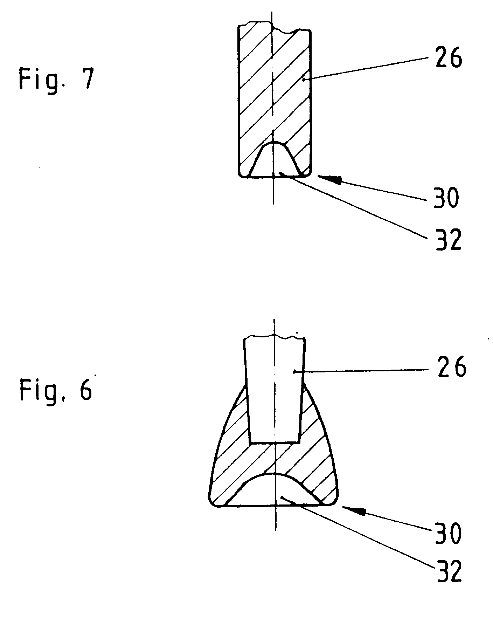

Die Tropfenfänger aus den Fig. 3 bis 6 haben eine größere Querschnittsabmessung als der Ventilbetätigungsstift 26. Alternativ kann die Querschnittsabmessung des Tropfenfängers aus Fig. 7 derjenigen des Ventilbetätigungsstift 26 entsprechen.

Vorzugsweise haben der Ventilbetätigungsstift 26 und die Tropfenfänger 30 einen kreisrunden Querschnitt. Außerdem sollten alle Ränder (insbesondere der äußere Rand an der Unterseite) abgerundet sein, damit das Wasser leichter in die Vertiefung 32 gelangen kann und nicht an irgendwelchen Kanten unkontrolliert abtropft.

Während der Tropfenfänger 30 aus Fig. 3 eine ebene Oberseite 54 hat, befindet sich an dieser Stelle gemäß den Fig. 4 und 5 eine ringförmige Wasserauffangwanne 52 (wie bei den Fig. 1 und 2). Diese unterstützt die wasserauffangende Schutzwirkung der Vertiefung 32. Demgenüber ist die Oberseite bei Fig. 6 abgerundet, damit das Wasser leichter zur Unterseite gelangen kann.

Die Größe und die Form der Vertiefung 32 können den jeweiligen Bedürfnissen angepaßt werden. Vorzugsweise sollte eine einzige, zentrale und bezüglich ihres Durchmessers möglichst große Vertiefung 32 vorgesehen sein. Diese sollte eine geeignete Form und Größe haben, damit sich das Wasser zuverlässig an der vertieften Unterseite des Tropfenfängers 30 sammeln kann. Die Vertiefung 32 kann im Querschnitt beipielsweise etwa kegelig oder kugelkalottenförmig sein.

Das Kleintiertränkeventil nach der vorliegenden Erfindung ist vielfältig abwandelbar. Wichtig ist dabei stets, daß am Ventilbetätigungsstift ein geeigneter Tropfenfänger 30 mit einer wasseraufnehmenden unterseitigen Vertiefung 32 vorgesehen ist.

## Patentansprüche

1. Kleintiertränkeventil, insbesondere für Hühner, mit einem einen steuerbaren Wasserdurchlaufkanal (42) aufweisenden Ventilgehäuse (14), wobei ein erstes Ende des Ventilgehäuses mit einer Wasserrohrleitung strömungsmäßig verbindbar ist, wobei ferner von einem zweiten Ende des Ventilgehäuses ein von einem Tier betätigbarer, insbesondere kippbarer und/oder längsverschiebbarer, in Betriebsposition etwa vertikaler Ventilbetätigungsstift (26) vorsteht, wobei ferner in einem erweiterten Gehäuseinnenraum (20) ein unter Schwerkrafteinfluß bewegliches Ventildichtelement (22, 48) angeordnet ist, dem wasserablaufseitig ein stationärer ringförmiger Ventildichtsitz (24) zugeordnet ist und das beim Handhaben des Ventilbetätigungsstifts von seinem Ventildichtsitz öffnend abhebbar ist, und wobei am freien Ende des Ventilbetätigungsstiftes ein Tropfenfänger (30) angeordnet ist,
**dadurch gekennzeichnet,**
daß der Tropfenfänger (30) an seiner in Betriebsposition unterseitigen Stirnseite mit wenigstens einer zum Ansammeln von Wasser geeigneten Vertiefung (32) ausgebildet ist.

2. Kleintiertränkeventil nach Anspruch 1, dadurch gekennzeichnet, daß der Tropfenfänger (30) mit einer zentralen Vertiefung (32) ausgebildet ist.

3. Kleintiertränkeventil nach Anspruch 2, dadurch gekennzeichnet, daß die in Längsrichtung des Ventilbetätigungsstifts gemessene Tiefe der Vertiefung (32) von ihrem äußeren Rand bis zu ihrem Zentrum zunimmt.

4. Kleintiertränkeventil nach Anspruch 3, dadurch gekennzeichnet, daß die Tiefe der Vertiefung (32) von außen nach innen gleichmäßig zunimmt.

5. Kleintiertränkeventil nach einem der Ansprüche 1 bis 4, dadurch gekennzeichnet, daß der Querschnitt der Vertiefung (32) kreisrund ist.

6. Kleintiertränkeventil nach einem der Ansprüche 1 bis 5, dadurch gekennzeichnet, daß die Vertiefung (32) kegel- oder kegelstumpfförmig ausgebildet ist.

7. Kleintiertränkeventil nach einem der Ansprüche 1 bis 5, dadurch gekennzeichnet, daß die Vertiefung (32) kugelkalottenförmig ausgebildet ist.

8. Kleintiertränkeventil nach einem der Ansprüche 1 bis 7, dadurch gekennzeichnet, daß ein die Vertiefung (32) außen begrenzender und in den Umfangsbereich des Tropfenfängers (30) oder Ventilbetätigungsstifts (26) übergehender unterer Rand des Tropfenfängers abgerundet ist.

9. Kleintiertränkeventil nach einem der Ansprüche 1 bis 8, dadurch gekennzeichnet, daß die äußere Querschnittsabmessung oder der Außendurchmesser des Tropfenfängers (30) der äußeren Querschnittsabmessung oder dem Außendurchmesser des Ventilbetätigungsstifts (26) entspricht.

10. Kleintiertränkeventil nach einem der Ansprüche 1 bis 8, dadurch gekennzeichnet, daß die äußere Querschnittsabmessung oder der Außendurchmesser des Tropfenfängers (30) größer als die äußere Querschnittsabmessung oder der Außendurchmesser des Ventilbetätigungsstifts (26) ist.

11. Kleintiertränkeventil nach Anspruch 10, dadurch gekennzeichnet, daß an einer in Betriebsposition oberen Stirnseite des Tropfenfängers (30) eine Wasserauffangwanne (52) ausgebildet ist.

12. Kleintiertränkeventil nach Anspruch 11, dadurch gekennzeichnet, daß die Wasserauffangwanne (52) ringförmig ausgebildet ist und den Ventilbetätigungsstifts (26) umgibt.

13. Kleintiertränkeventil nach einem der Ansprüche 1 bis 12, dadurch gekennzeichnet, daß der Tropfenfänger (30) als Bestandteil des Ventilbetätigungsstifts (26) ausgebildet ist.

14. Kleintiertränkeventil nach Anspruch 13, dadurch gekennzeichnet, daß der Tropfenfänger (30) als endseitige Materialanstauchung des Ventilbetätigungsstifts (26) ausgebildet ist.

15. Kleintiertränkeventil nach einem der Ansprüche 1 bis 12, dadurch gekennzeichnet, daß der Tropfenfänger (30) als mit dem Ventilbetätigungsstift (26) verbundenes separates Teil ausgebildet ist.

16. Kleintiertränkeventil nach Anspruch 15, dadurch gekennzeichnet, daß der Tropfenfänger (30) als ein am freien oder unteren Ende des Ventilbetätigungsstifts (26) anflanschbares oder auf diesen aufschiebbares Teil ausgebildet ist.

17. Kleintiertränkeventil nach einem der Ansprüche 1 bis 16, dadurch gekennzeichnet, daß sich die Querschnittsabmessung des Ventilbetätigungsstifts (26) über den größten Teil seiner Länge in Richtung zum Tropfenfänger (30) allmählich, wie konisch, vergrößert.

18. Kleintiertränkeventil nach einem der Ansprüche 1 bis 17, dadurch gekennzeichnet, daß der Ventilbetätigungsstift (26) einen als Ventildichtelement ausgebildeten Kopf (48) mit einer konisch ringförmigen Dichtfläche aufweist, die einem ringförmigen, wie konischen, Ventildichtsitz (24) zugeordnet ist.

19. Kleintiertränkeventil nach einem der Ansprüche 1 bis 17, dadurch gekennzeichnet, daß der Ventilbetätigungsstift (26) einen zum Verlagern eines separaten kugelförmigen Ventildichtelements (22) dienenden Kopf (28) aufweist..

20. Kleintiertränkeventil nach Anspruch 19, dadurch gekennzeichnet, daß der Kopf (28) etwa zylindrisch ausgebildet ist und im Ruhezustand auf einem Absatz des Ventilgehäuses (14, 16) zusätzlich abdichtend aufliegt.

21. Kleintiertränkeventil nach einem der Ansprüche 1 bis 20, dadurch gekennzeichnet, daß der Ventilbetätigungsstift (26) zumindest an einen im Gehäuseinnenraum (20) gelegenen Kopf (28, 48) angrenzend zylindrisch ausgebildet ist und in diesem Bereich mit kleinem Spiel durch eine kurze, zylindrische Durchflußbegrenzungsöffnung (34) des Ventilgehäuses (14, 16) geführt ist.

22. Kleintiertränkeventil nach Anspruch 21, dadurch gekennzeichnet, daß sich an die Durchflußbegrenzungsöffnung (34) auslaufseitig eine ein Kippen bzw. Schwenken des Ventilbetätigungsstifts (26) ermöglichende konische Erweiterung (36) des Ventilgehäuses (14, 16) anschließt.

23. Kleintiertränkeventil nach Anspruch 21 oder 22, dadurch gekennzeichnet, daß der Ventilbetätigungsstift (26) von seinem der Durchflußbegrenzungsöffnung (34) zugeordneten zylindrischen Bereich ausgehend in Richtung zum Tropfenfänger (30) zumindest bereichsweise konisch verjüngt ausgebildet ist.

24. Kleintiertränkeventil nach einem der Ansprüche 1 bis 23, dadurch gekennzeichnet, daß dem Ventildichtelement (22, 48) ein hierdurch anhebbarer Vorschaltstift (38) zugeordnet ist, der in einem einlaßseitigen, in den Gehäuseinnenraum (20) mündenden Vorschaltkanal (42) des Ventilgehäuses (14) mit engem Spiel längsverschiebbar gelagert ist.

## Claims

1. Drinking valve for small animals, particularly for chickens, with a valve housing (14) having a controllable water flow duct (42), wherein a first end of the valve housing can be connected to a water pipe for flow purposes, wherein a valve actuation pin (26) which is approximately vertical in the operating position and can be actuated by an animal, in particular tilted and/or moved longitudinally, also projects from a second end of the valve housing, wherein a valve sealing element (22, 48) which can be moved under the effect of gravity is also arranged in an enlarged housing internal chamber (20), to which sealing element a stationary annular valve face (24) is allocated on the water outlet side and which can be lifted from its valve face in an opening manner when the valve actuation pin is operated, and wherein a drop catcher (30) is arranged at the free end of the valve actuation pin, characterized in that the drop catcher (30) is formed with at least one recess (32) suitable for collecting water at its front face which is the underside in the operating position.

2. Drinking valve for small animals according to Claim 1, characterized in that the drop catcher (30) is formed with a central recess (32).

3. Drinking valve for small animals according to Claim 2, characterized in that the depth of the recess (32) measured in longitudinal direction of the valve actuation pin increases from its outer edge to its centre.

4. Drinking valve for small animals according to Claim 3, characterized in that the depth of the recess (32) increases uniformly from the outside inwards.

5. Drinking valve for small animals according to one of Claims 1 to 4, characterized in that the cross-section of the recess (32) is circular.

6. Drinking valve for small animals according to one of Claims 1 to 5, characterized in that the recess (32) is formed in the shape of a cone or a truncated cone.

7. Drinking valve for small animals according to one of Claims 1 to 5, characterized in that the recess (32) is formed in the shape of a spherical cap.

8. Drinking valve for small animals according to one of Claims 1 to 7, characterized in that a lower edge of the drop catcher which limits the recess (32) externally and blends into the circumferential region of the drop catcher (30) or valve actuation pin (26) is rounded.

9. Drinking valve for small animals according to one of Claims 1 to 8, characterized in that the external cross-sectional dimension or the external diameter of the drop catcher (30) corresponds to the external cross-sectional dimension or the external diameter of the valve actuation pin (26).

10. Drinking valve for small animals according to one of Claims 1 to 8, characterized in that the external cross-sectional dimension or the external diameter of the drop catcher (30) is larger than the external cross-sectional dimension or the external diameter of the valve actuation pin (26).

11. Drinking valve for small animals according to Claim 10, characterized in that a water collecting trough (52) is formed on a front face of the drop catcher (30) which is uppermost in the operating position.

12. Drinking valve for small animals according to Claim 11, characterized in that the water collecting trough (52) is annular in shape and surrounds the valve actuation pin (26).

13. Drinking valve for small animals according to one of Claims 1 to 12, characterized in that the drop catcher (30) is formed as a constituent part of the valve actuation pin (26).

14. Drinking valve for small animals according to Claim 13, characterized in that the drop catcher (30) is formed as a terminal material upset of the valve actuation pin (26).

15. Drinking valve for small animals according to one of Claims 1 to 12, characterized in that the drop catcher (30) is formed as a separate component connected to the valve actuation pin (26).

16. Drinking valve for small animals according to Claim 15, characterized in that the drop catcher (30) is formed as a component which can be flanged onto the free or lower end of the valve actuation pin (26) or pushed onto it.

17. Drinking valve for small animals according to one of Claims 1 to 16, characterized in that the cross-sectional dimension of the valve actuation pin (26) gradually, such as conically, increases over the largest part of its length in the direction of the drop catcher (30).

18. Drinking valve for small animals according to one of Claims 1 to 17, characterized in that the valve actuation pin (26) has a head (48) formed as valve sealing element with a conically annular sealing surface which is allocated to an annular, such as conical, valve face (24).

19. Drinking valve for small animals according to one of Claims 1 to 17, characterized in that the valve actuation pin (26) has a head (28) serving to displace a separate, spherical valve sealing element (22).

20. Drinking valve for small animals according to Claim 19, characterized in that the head (28) is approximately cylindrical in shape and in the rest position rests on a shoulder of the valve housing (14, 16) to provide an additional seal.

21. Drinking valve for small animals according to one of Claims 1 to 20, characterized in that the valve actuation pin (26) is cylindrical in shape at least adjacent to a head (28, 48) lying in the housing internal chamber (20) and is guided through a short, cylindrical flow limiting opening (34) of the valve housing (14, 16) in this region with small clearance.

22. Drinking valve for small animals according to Claim 21, characterized in that a conical enlargement (36) of the valve housing (14, 16) which enables the valve actuation pin (26) to be tilted and/or pivoted adjoins the flow limiting opening (34) on the outlet side.

23. Drinking valve for small animals according to Claim 21 or 22, characterized in that the valve actuation pin (26) is formed to be conically tapering at least in regions, starting from its cylindrical region allocated to the flow limiting opening (34) in the direction of the drop catcher (30).

24. Drinking valve for small animals according to one of Claims 1 to 23, characterized in that allocated to the valve sealing element (22, 48) is an upstream pin (38) which can be raised by it, which upstream pin is mounted with narrow clearance and in a longitudinally movable manner in an upstream duct (42) of the valve housing (14) which is on the inlet side and opens into the housing internal chamber (20).

## Revendications

1. Soupape d'abreuvoir pour petits animaux, en particulier pour des poules, comportant un corps de soupape (14) muni d'un conduit de passage d'eau (42) qui peut être commandé, une première extrémité du corps de soupape pouvant être reliée en écoulement avec une tuyauterie d'eau, une tige de commande de soupape (26) actionnable par un animal, pouvant basculer et/ou être déplacée dans le sens longitudinal en particulier, dépassant à peu près à la verticale, en position de service, d'une seconde extrémité du corps de soupape, un élément d'étanchéité de soupape (22, 48) mobile sous l'effet de la pesanteur, auquel est associé côté sortie d'eau un siège d'étanchéité de soupape annulaire (24), stationnaire, et qui peut se décoller de son siège d'étanchéité en position d'ouverture lors de la manipulation de la tige de commande de soupape, étant disposé dans un compartiment interne élargi (20) du corps, et un antigoutte (30) étant prévu sur l'extrémité libre de la tige de commande de soupape, caractérisée en ce que l'antigoutte (30) est muni, sur son côté frontal inférieur en position de service, d'au moins une cavité (32) adaptée à l'accumulation d'eau.

2. Soupape d'abreuvoir pour petits animaux suivant la revendication 1, caractérisée en ce que l'antigoutte (30) est muni d'une cavité centrale (32).

3. Soupape d'abreuvoir pour petits animaux suivant la revendication 2, caractérisée en ce que la profondeur de la cavité (32), mesurée dans le sens longitudinal de la tige de commande de soupape, augmente du bord externe jusqu'au centre de la cavité.

4. Soupape d'abreuvoir pour petits animaux suivant la revendication 3, caractérisée en ce que la profondeur de la cavité (32) augmente régulièrement de l'extérieur vers l'intérieur.

5. Soupape d'abreuvoir pour petits animaux suivant l'une des revendications 1 à 4, caractérisée en ce que la section transversale de la cavité (32) est circulaire.

6. Soupape d'abreuvoir pour petits animaux suivant l'une des revendications 1 à 5, caractérisée en ce que la cavité (32) est réalisée en forme de cône ou de tronc de cône.

7. Soupape d'abreuvoir pour petits animaux suivant l'une des revendications 1 à 5, caractérisée en ce que la cavité (32) est réalisée en forme de calotte sphérique.

8. Soupape d'abreuvoir pour petits animaux suivant l'une des revendications 1 à 7, caractérisée en ce qu'un bord inférieur de l'antigoutte est arrondi, ce bord délimitant la cavité (32) côté externe et se prolongeant dans la zone périphérique de l'antigoutte (30) ou de la tige de commande de soupape (26).

9. Soupape d'abreuvoir pour petits animaux suivant l'une des revendications 1 à 8, caractérisée en ce que la dimension externe de la section transversale ou le diamètre externe de l'antigoutte (30) correspond à la dimension externe de la section transversale ou au diamètre externe de la tige de commande de soupape (26).

10. Soupape d'abreuvoir pour petits animaux suivant l'une des revendications 1 à 8, caractérisée en ce que la dimension externe de la section transversale ou le diamètre externe de l'anti goutte (30) est supérieur(e) à la dimension externe de la section transversale ou au diamètre externe de la tige de commande de soupape (26).

11. Soupape d'abreuvoir pour petits animaux suivant la revendication 10, caractérisée en ce qu'une auge collectrice d'eau (52) est réalisée sur un côté frontal supérieur, en position de service, de l'antigoutte (30).

12. Soupape d'abreuvoir pour petits animaux suivant la revendication 11, caractérisée en ce que l'auge collectrice d'eau (52) a une réalisation annulaire et entoure la tige de commande de soupape (26).

13. Soupape d'abreuvoir pour petits animaux suivant l'une des revendications 1 à 12, caractérisée en ce que l'antigoutte (30) fait partie intégrante de la tige de commande de soupape (26).

14. Soupape d'abreuvoir pour petits animaux suivant la revendication 13, caractérisée en ce que l'antigoutte (30) est réalisé sous forme de refoulement de matière, côté extrême, de la tige de commande de soupape (26).

15. Soupape d'abreuvoir pour petits animaux suivant l'une des revendications 1 à 12, caractérisée en ce que l'antigoutte (30) est réalisé sous forme d'élément séparé, assemblé avec la tige de commande de soupape (26).

16. Soupape d'abreuvoir pour petits animaux suivant la revendication 15, caractérisée en ce que l'antigoutte (30) est réalisé sous forme d'élément pouvant être bridé sur l'extrémité libre ou inférieure de la tige de commande de soupape (26), ou pouvant être emmanché sur cette dernière.

17. Soupape d'abreuvoir pour petits animaux suivant l'une des revendications 1 à 16, caractérisée en ce que la dimension de la section transversale de la tige de commande de soupape (26) augmente graduellement sur la majeure partie de sa longueur, à la manière d'un cône, en direction de l'antigoutte (30).

18. Soupape d'abreuvoir pour petits animaux suivant l'une des revendications 1 à 17, caractérisée en ce que la tige de commande de soupape (26) présente une tête (48) réalisée sous forme d'élément d'étanchéité de soupape, avec une surface d'étancheité annulaire et conique associée à un siège d'étanchéité de soupape annulaire (24), tel que conique.

19. Soupape d'abreuvoir pour petits animaux suivant l'une des revendications 1 à 17, caractérisée en ce que la tige de commande de soupape (26) présente une tête (28), servant à déplacer un élément d'étanchéité de soupape (22) séparé, en forme de sphère.

20. Soupape d'abreuvoir pour petits animaux suivant la revendication 19, caractérisée en ce que la tête (28) a une réalisation à peu près cylindrique, et s'applique à l'état de repos sur un décrochement du corps de soupape (14, 16), en assurant une étanchéité supplémentaire.

21. Soupape d'abreuvoir pour petits animaux suivant l'une des revendications 1 à 20, caractérisée en ce que la tige de commande de soupape (26) a une réalisation cylindrique, au moins dans la zone limitrophe à une tête (28, 48) placée dans le compartiment interne (20) du corps, et est guidée dans cette zone, avec un jeu réduit, au travers d'une courte ouverture cylindrique de limitation de débit (34) du corps de soupape (14, 16).

22. Soupape d'abreuvoir pour petits animaux suivant la revendication 21, caractérisée en ce qu'un élargissement conique (36) du corps de soupape (14, 16), permettant un basculement et/ou un pivotement de la tige de commande de soupape (26), se situe côté sortie dans le prolongement de l'ouverture de limitation de débit (34).

23. Soupape d'abreuvoir pour petits animaux suivant l'une des revendications 21 et 22, caractérisée en ce que la tige de commande de soupape (26) a une réalisation rétrécie en cône, au moins par zones, à partir de sa zone cylindrique associée à l'ouverture de limitation de débit (34) en direction de l'antigoutte (30).

24. Soupape d'abreuvoir pour petits animaux suivant l'une des revendications 1 à 23, caractérisée en ce qu'une tige amont (38) est associée à l'élément d'étanchéité de soupape (22, 48), et peut être de ce fait soulevée, cette tige étant logée avec une possibilité de déplacement longitudinal et un jeu étroit dans un conduit amont (42) du corps de soupape (14), qui débouche côté admission dans le compartiment interne (20) du corps.
